# EUROPEAN PATENT APPLICATION

(11) **EP 2 278 437 A2**
(43) Date of publication of application: **26.01.2011**
(21) Application number: 10151617.7
(22) Date of filing: 26.01.2010
(51) Int. Cl.: G06F 3/038, G06F 3/033

(54) **Computer mouse**

(30) Priority: 19.05.2009 US 468851
(71) Applicant: Shining Union Limited, Tsuen Wan Hong Kong TWTL 353 (CN)
(72) Inventor: Wong, Kwok Fong, Tsuen Wan TWTL 353 Hongkong (HK); Ching, Pui Yi, Tsuen Wan TWTL 353 Hongkong (HK)
(74) Representative: Johansson, Lars-Erik

(57) **Abstract**

A computer mouse includes a housing having hollow for receiving a finger of a user, a control module inside the housing for detecting signals and controlling transmissions of the signals, and a fingerprint scanning module coupled to the control module for detecting fingerprints and transmitting fingerprint signals to the control module. The fingerprint scanning module includes a fingerprint scanner positioned in the hollow of the housing. A side view of the hollow may be close loop shaped, such as D-shaped, or open loop shaped, such as C-shaped.

## Description

### FIELD OF THE INVENTION

The present application relates to a computer mouse with a fingerprint scanner.

### BACKGROUND OF THE INVENTION

Computer mice and fingerprint scanners are common equipments to be used in connection with a computer. They are separate equipments that work independently. When these two equipments are required, they have to be connected one by one to the computer through different electrical wires and interfaces. A computer usually comes with a keyboard and a computer mouse. The computer mouse can be connected to the computer through an electrical wire. If needed, a separate fingerprint scanner will have to be connected to the computer through another electrical wire. This makes wiring and connection of equipments to a computer rather complicated. Furthermore, since an interface is required for each equipment to be connected to the computer, there may not be enough ports provided on the computer.

Therefore, there is a need to provide a single hand-held device that combines a computer mouse and a fingerprint scanner.

The above description of the background is provided to aid in understanding a computer mouse, but is not admitted to describe or constitute pertinent prior art to the computer mouse disclosed in the present patent application, or consider any information as material to the patentability of the claims of the present application.

### SUMMARY OF THE INVENTION

The present patent application is directed to a computer mouse. The computer mouse includes a housing having hollow for receiving a finger of a user, a control module inside the housing for detecting signals and controlling transmissions of the signals, and a fingerprint scanning module coupled to the control module for detecting fingerprints and transmitting fingerprint signals to the control module. The fingerprint scanning module includes a fingerprint scanner positioned in the hollow of the housing.

A side view of the hollow may be close loop shaped, such as D-shaped, or open loop shaped, such as C-shaped.

In one embodiment, the hollow of the housing is a through-hole extending from one side of the housing to an opposite side of the housing.

The fingerprint scanning module may be a radio frequency fingerprint scanning module.

The computer mouse may further include a data storage module coupled to the control module for storing data. In one embodiment, the data storage module and the fingerprint scanning module, when detached, are capable of wireless communication with the control module.

The computer mouse may further include an optical mechanism module coupled to the control module.

The computer mouse may further include an interface coupled to the control module for connecting the computer mouse to a periphery device. In one embodiment, the interface is a USB interface. In another embodiment, the interface is an IEEE interface.

### BRIEF DESCRIPTION OF THE DRAWINGS

Specific embodiments of the computer mouse disclosed in the present application will now be described by way of example with reference to the accompanying drawings, wherein:
FIG. 1 is a block diagram of the computer mouse according to an embodiment disclosed in the present application;
FIG. 2 is a front perspective view of the computer mouse according to an embodiment disclosed in the present application;
FIG. 2a is a side view of the computer mouse shown in FIG. 2;
FIG. 3 is a front perspective view of the computer mouse according to another embodiment disclosed in the present application;
FIG. 3a is a side view of the computer mouse shown in FIG. 3;
FIG. 4 is a circuit diagram of the computer mouse;
FIG. 5 is a circuit diagram of a radio frequency fingerprint scanner of the computer mouse;
FIG. 6 is a circuit diagram of a radio frequency fingerprint sensor of the radio frequency fingerprint scanner; and
FIG. 7 is a circuit diagram of a USB interface of the computer mouse.

### DETAILED DESCRIPTION OF THE INVENTION

Reference will now be made in detail to a preferred embodiment of the computer mouse disclosed in the present application, examples of which are also provided in the following description. Exemplary embodiments of the computer mouse disclosed in the present application are described in detail, although it will be apparent to those skilled in the relevant art that some features that are not particularly important to an understanding of the computer mouse may not be shown for the sake of clarity.

Furthermore, it should be understood that the computer mouse disclosed in the present application is not limited to the precise embodiments described below and that various changes and modifications thereof may be effected by one skilled in the art without departing from the spirit or scope of the appended claims. For example, elements and/or features of different illustrative embodiments may be combined with each other and/or substituted for each other within the scope of this disclosure and appended claims.

It should be noted that throughout the specification and claims herein, when one element is said to be "coupled" or "connected" to another, this does not necessarily mean that one element is fastened, secured, or otherwise attached to another element. Instead, the term "coupled" or "connected" means that one element is either connected directly or indirectly to another element, or is in mechanical or electrical communication with another element.

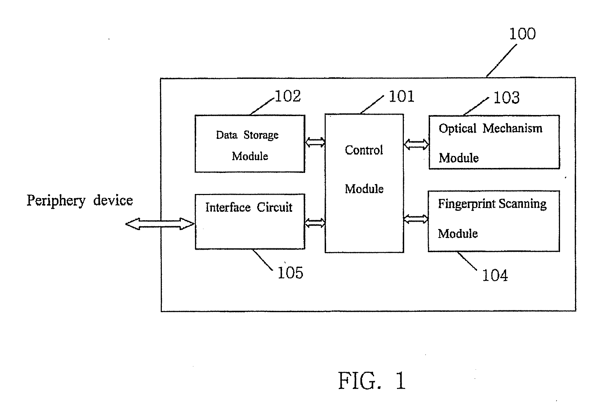

FIG. 1 shows a block diagram of the computer mouse combining a computer mouse and a fingerprint scanner according to an embodiment disclosed in the present application. A USB disk drive may also be included in the computer mouse.

In this embodiment, the computer mouse may include a housing 100, a control module 101 mounted within the housing 100, a data storage module 102 coupled to the control module 101, an optical mechanism module 103 coupled to the control module 101, a fingerprint scanning module 104 coupled to the control module 101, and an interface circuit 105 coupled to the control module 101. The combination of a computer mouse, a fingerprint scanner and a USB disk drive in a single computer mouse can reduce the number of separate equipments needed and reduce the occupation of interface resources available on a computer.

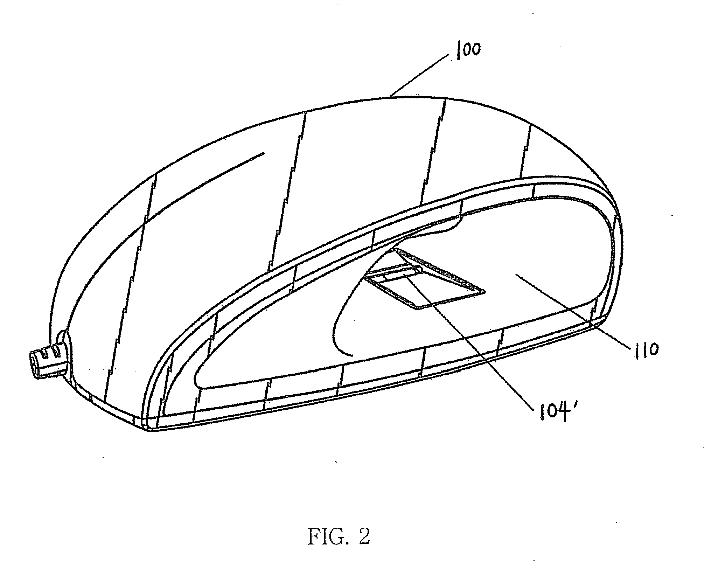

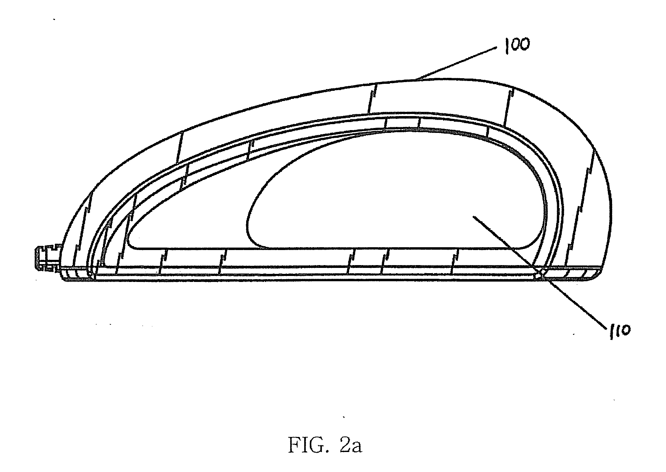

As depicted in FIGS. 2 and 2a, the computer mouse can be in the form of a computer mouse with a fingerprint scanner incorporated therein. A USB disk drive can also be incorporated in the computer mouse. The computer mouse has a hollow 110 integrally formed in the housing 100 for receiving a finger of a user. According to the illustrated embodiment, the finger-receiving hollow 110 is a through hole extending from one side of the housing 100 to an opposite side of the housing 100, and the side view of the hollow 110 is D-shaped. In other embodiments, the side view of the hollow 110 is O-shaped, rectangular shaped or other close loop shaped. The fingerprint scanning module 104 includes a fingerprint scanner 104'. The fingerprint scanner 104' may be provided inside the finger-receiving hollow 110 with a fingerprint scanning surface being disposed substantially along a peripheral wall defining the finger-receiving hole 110. The fingerprint scanning surface may be facing upwards or in any position convenient for fingerprint scanning.

The fingerprint scanner 104', serving as an equipment of the computer mouse, is hidden inside the finger-receiving hollow 110. As a result, the fingerprint scanner 104' can be protected from damage and contamination by hard or sharp objects, water, dust, etc. The finger-receiving hollow 110 can make the computer mouse lighter and is suitable for both left-handed and right handed users.

In this embodiment, the housing 100 may be shaped and sized to accommodate therein the control module 101, the data storage module 102, the optical mechanism module 103, the fingerprint scanning module 104, and the interface circuit 105. The housing 100 may be made of plastic or any suitable material.

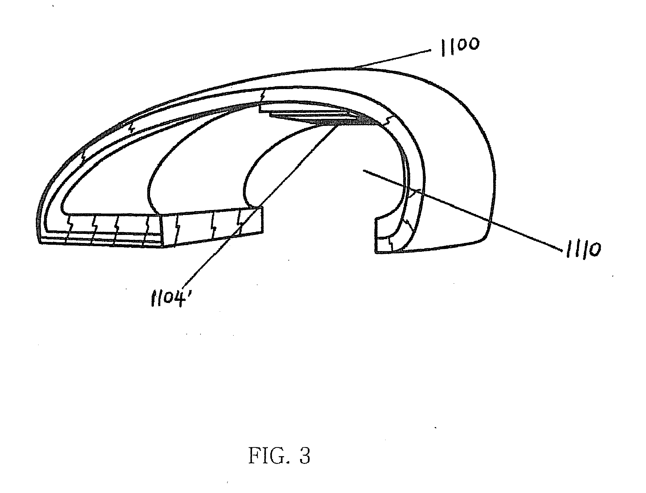

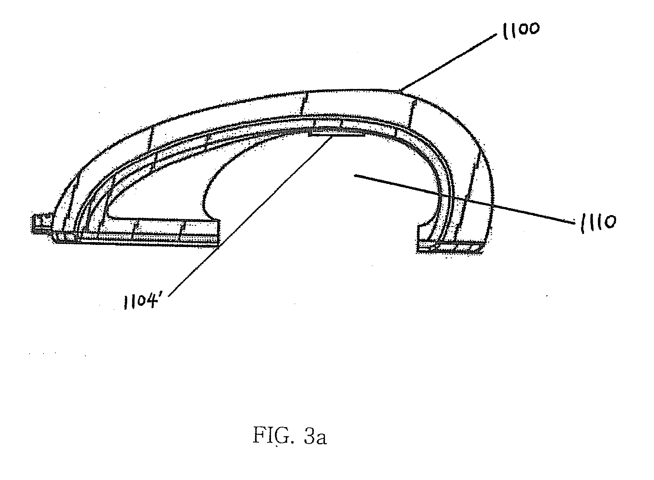

FIGS. 3 and 3a illustrate another embodiment of the computer mouse with a fingerprint scanner incorporated therein. A USB disk drive can also be incorporated in the computer mouse. The computer mouse has a hollow 1110 integrally formed in the housing 1100 for receiving a finger of a user. According to the illustrated embodiment, the finger-receiving hollow 1110 is a through hole extending from one side of the housing 1100 to an opposite side of the housing 1100, and the side view of the hollow 110 is C-shaped or other open loop shaped. A fingerprint scanner 1104' may be provided inside the finger-receiving hollow 110 with a fingerprint scanning surface being disposed substantially along a peripheral wall defining the finger-receiving hole 1110. The fingerprint scanning surface may be facing downwards or in any position convenient for fingerprint scanning.

The fingerprint scanner 1104', serving as an equipment of the computer mouse, is hidden inside the finger-receiving hollow 1110. As a result, the fingerprint scanner 1104' can be protected from damage and contamination by hard or sharp objects, water, dust, etc. The finger-receiving hollow 1110 can make the computer mouse even lighter than the one in FIG. 2 and is suitable for both left-handed and right handed users.

In this embodiment, the housing 1100 may be shaped and sized to accommodate therein the control module 101, the data storage module 102, the optical mechanism module 103, the fingerprint scanning module 104, and the interface circuit 105. The housing 1100 may be made of plastic or any suitable material.

Although it has been shown and described that the finger-receiving hollow is a through hole extending from one side of the housing to the other side of the housing, it is understood by one skilled in the art that the finger-receiving hole may extend from a front end of the housing to a rear end of the housing, or from a top surface of the housing to a bottom surface of the housing. It is also understood by one skilled in the art that the finger-receiving hollow can be a blind hole or a recess extending inwards from an outer surface of the housing.

Referring back to FIG. 1, the control module 101 is employed to control the operation of the entire computer mouse. The control module 101 may include a board with electrical circuits formed thereon. The control module 101 can be fixedly mounted inside the housing 100. The control module 101 may include circuits for detecting signals and controlling the transmission of the detected signals.

For example, the control module 101 may transmit and receive data to and from the data storage module 102. The control module 101 can receive and process fingerprint signals transmitting from the fingerprint scanning module 104 and send the fingerprint signals through the interface circuit 105 to a periphery device such as a computer. The control module 101 can make comparison with the data stored in the data storage module 102 so as to complete fingerprint identification and determine whether read and/or write operations are permitted.

The data storage module 102 is used for storing data. The data storage module 102 may be in the form of a flash storage device or any other conventional data storage device. The data storage module 102 together with a USB interface may form a USB disk drive for storing data.

The data storage module 102 may be detachably coupled to the control module 101. When detached, the data storage module 102 may be capable of wireless communication with the control module 101. A user can read and/or write data through the control of the control module 101.

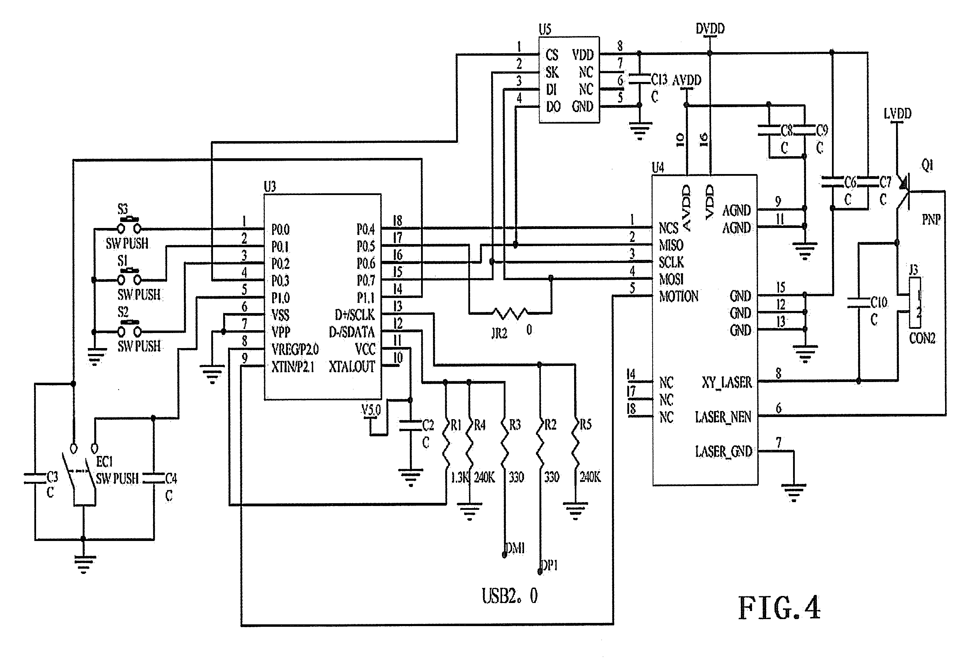

The optical mechanism module 103 may be coupled to the control module 101 to realize the function of a computer mouse. The optical mechanism module 103 can employ any conventional technology of a computer mouse and is therefore not described in detail herein. A circuit diagram of the optical mechanism module 103 of a computer mouse is shown in FIG. 4. The optical mechanism module 103 can operate independently after the data storage module 102 and the fingerprint scanning module 104 are detached from the control module 101.

The fingerprint scanning module 104 can also be detachably coupled to the control module 101. When detached, the fingerprint scanning module 104 may be capable of wireless communication with the control module 101. The fingerprint scanning module 104 can be employed to detect fingerprints and transmit fingerprint signals to the control module 101 for processing.

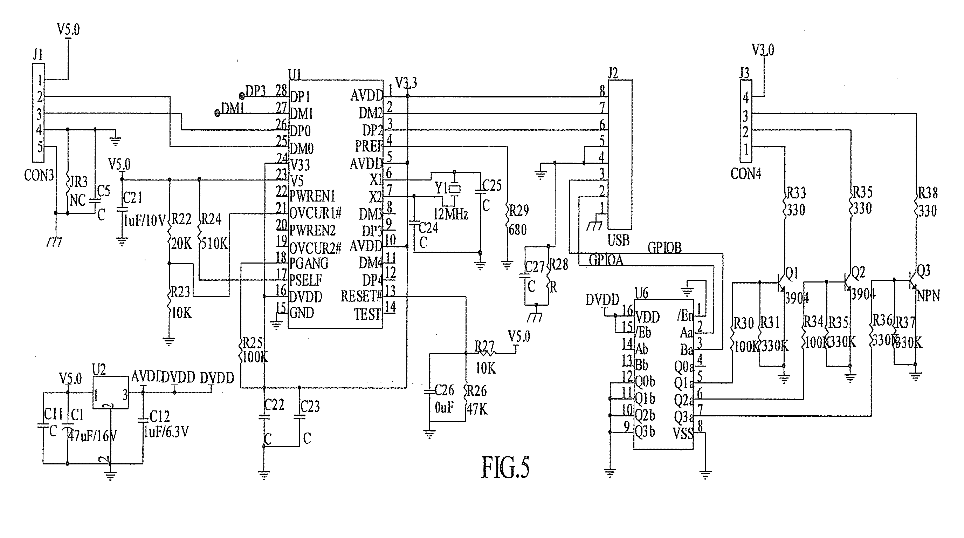

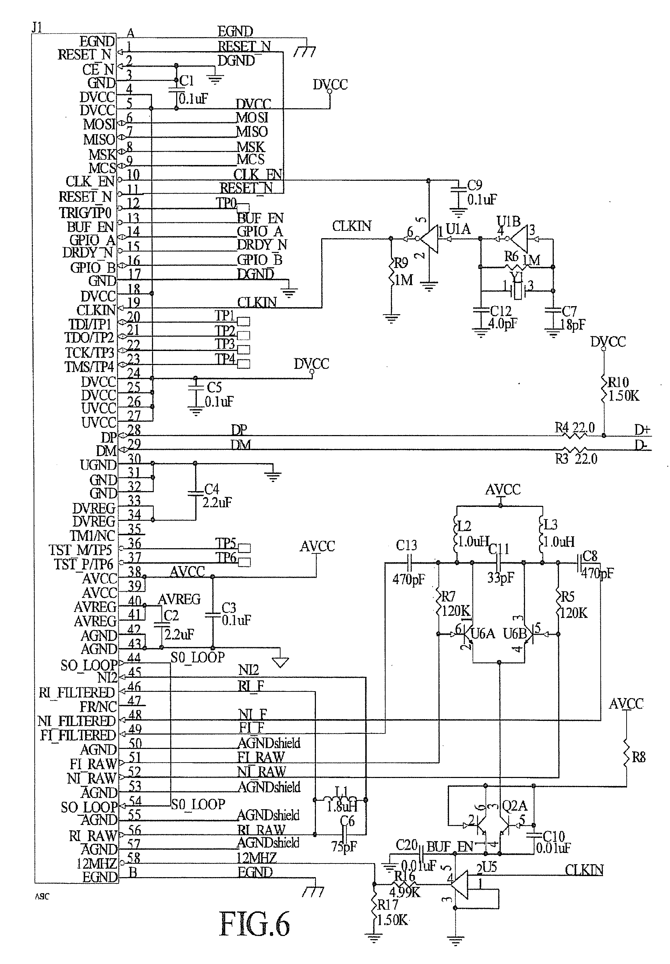

The fingerprint scanning module 104 may use a flexible circuit as a sensor for detecting fingerprints. In the illustrated embodiment, the fingerprint scanning module 104 is a radio frequency fingerprint scanning module. A circuit diagram of the radio frequency fingerprint scanning module 104 is shown in FIG. 5, and a circuit diagram of a radio frequency fingerprint sensor of the radio frequency fingerprint scanning module 104 is shown in FIG. 6.

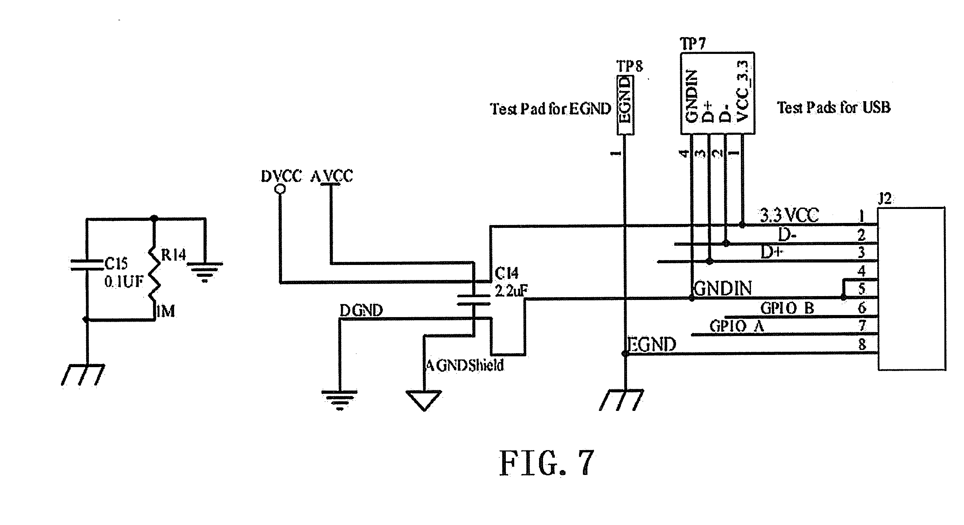

The interface circuit 105 may be coupled to the control module 101 and provides an interface between the computer mouse of the present patent application and a periphery device such as a computer. The interface 105 may be universal serial bus (USB) interface or any standard interfaces set by IEEE. A circuit diagram of a USB interface of the computer mouse is shown in FIG. 7.

While the computer mouse in the present application has been shown and described with particular references to a number of preferred embodiments thereof, it should be noted that various other changes or modifications may be made without departing from the scope of the appending claims.

## Claims

1. A computer mouse comprising:
a housing comprising hollow for receiving a finger of a user;
a control module inside the housing for detecting signals and controlling transmissions of the signals; and
a fingerprint scanning module coupled to the control module for detecting fingerprints and transmitting fingerprint signals to the control module, the fingerprint scanning module comprising a fingerprint scanner positioned in the hollow of the housing.

2. The computer mouse as claimed in claim 1, further comprising:
a data storage module coupled to the control module for storing data; and
an interface coupled to the control module for connecting the computer mouse to a periphery device.

3. The computer mouse as claimed in claim 1 or 2, wherein a side view of the hollow is close loop shaped.

4. The computer mouse as claimed in claim 3, wherein a side view of the hollow is D-shaped.

5. The computer mouse as claimed in claim 1 or 2, wherein a side view of the hollow is open loop shaped.

6. The computer mouse as claimed in claim 5, wherein a side view of the hollow is C-shaped.

7. The computer mouse as claimed in claim 1 or 2, wherein the hollow of the housing is a through-hole extending from one side of the housing to an opposite side of the housing.

8. The computer mouse as claimed in claim 1, wherein the fingerprint scanning module is a radio frequency fingerprint scanning module.

9. The computer mouse as claimed in claim 1, further comprising a data storage module coupled to the control module for storing data.

10. The computer mouse as claimed in claim 9, wherein the data storage module and the fingerprint scanning module, when detached, are capable of wireless communication with the control module.

11. The computer mouse as claimed in claim 1 or 2, further comprising an optical mechanism module coupled to the control module.

12. The computer mouse as claimed in claim 1, further comprising an interface coupled to the control module for connecting the computer mouse to a periphery device.

13. The computer mouse as claimed in claim 12, wherein the interface is a USB interface or an IEEE interface.

14. A computer mouse comprising:
a housing comprising a through-hole for receiving a finger of a user, the through-hole extending from one side of the housing to an opposite side of the housing;
a control module inside the housing for detecting signals and controlling transmissions of the signals;
a fingerprint scanning module coupled to the control module for detecting fingerprints and transmitting fingerprint signals to the control module, the fingerprint scanning module comprising a fingerprint scanner positioned in the through-hole of the housing;
a data storage module coupled to the control module for storing data;
an interface coupled to the control module for connecting the computer mouse to a periphery device; and
an optical mechanism module coupled to the control module.
